# EUROPÄISCHE PATENTSCHRIFT

(11) **EP 1 247 705 B1**
(45) Veröffentlichungstag und Bekanntmachung des Hinweises auf die Patenterteilung: **11.05.2011**
(21) Anmeldenummer: 02007116.3
(22) Anmeldetag: 28.03.2002
(51) Int. Cl.: B60R 25/00, B60R 25/04

(54) **Zugriffsprüfvorrichtung für Kraftfahrzeuge**
Device for checking user entitlement for motor vehicles
Dispositif de vérification d'autorisation d'un utilisateur pour des véhicules

(30) Priorität: 28.03.2001 DE 10115337
(43) Veröffentlichungstag der Anmeldung: 09.10.2002
(73) Patentinhaber: Huf Hülsbeck & Fürst GmbH & Co. KG, 42551 Velbert (DE)
(72) Erfinder: Jendritza, Daniel, Dr.-Ing., 47809 Krefeld (DE); Platzköster, Andreas, Dipl.-Ing., 46514 Schermbeck (DE)
(74) Vertreter: Eggers, Thomas Peter

(56) Entgegenhaltungen:
- EP-A- 0 819 589
- EP-A- 0 865 976
- EP-A- 1 002 704
- EP-A- 1 067 028
- DE-A- 19 842 544
- DE-A- 19 906 268
- DE-C- 19 839 355
- US-A- 5 276 728
- US-A- 6 028 507

## Beschreibung

Die Erfindung betrifft eine Zugriffsprüfvorrichtung für türlose Fahrzeuge ohne geschlossene Fahrgastzelle, wie Krafträder, motorisierte Boote, Motorschlitten, Jetski oder dergleichen, mit einem bedienerseitigen Identifizierungselement sowie einer fahrzeugseitigen Steuereinheit.

Eine derartige Zugriffsprüfvorrichtung ist Gegenstand der EP 1 067 028 A2. In diesem Zusammenhang wird der Dialog zwischen einem Transponder und einer Steuereinheit dadurch gestartet, dass ein Startknopf gedrückt wird. Weiter beschreibt EP 1067028 A2 ein Fahrzeug mit Zugriffprüfung zur Prüfung der Zugangsberechtigung eines Bedieners mit einem bedienerseitigen Identifizierungselement, wobei das Identifizierungselement, wenn sich der zugriffswillige Bediener dem Fahrzeug nähert , in einen die Zugriffsberechtigung des Bedieners prüfenden drahtlosen Dialog mit der Steuereinheit tritt.

Darüber hinaus kennt man ein Sicherheitssystem für Krafträder, welches in der US 6 028 507 beschrieben wird. Hier sind einzelne Elemente des Sicherheitssystems im geschützten Innern des betreffenden Fahrzeuges angeordnet.

Ferner wird eine Zugriffsprüfvorrichtung für Krafträder im Rahmen der EP 0 819 589 A1 beschrieben, die sich wiederum primär mit der Diebstahlsicherung beschäftigt.

Daneben sind so genannte "passiv go"-Zugangsprüfvorrichtungen aus dem Automobilbereich in vielfältiger Ausführung bekannt. Diese beruhen - wie der Erfindungsgegenstand - auf dem Prinzip, dass ein von dem einen Zugriff wünschenden Bediener mitgeführtes Identfizierungselement mit Hilfe der fahrzeugseitigen Steuereinheit erkannt und auf seine Berechtigung hin überprüft wird (vgl. DE 198 39 355 C1). Dieses Identifizierungselement wirkt zumeist passiv und kann im einfachsten Fall als Chipkarte ausgeführt sein, wobei die hierauf abgelegten Daten von der fahrzeugseitigen Steuereinheit im Rahmen des drahtlosen Dialoges überprüft werden.

Daneben kennt man so genannte - ebenfalls von der vorliegenden Erfindung umfasste - "keyless entry"-Systeme, bei welchen das bedienerseitige Identifizierungselement aktiv als Transponder bzw. fernbedienbarer Schlüssel ausgeführt ist. Der tragbare Transponder verfügt in der Regel über einen Auslöseknopf, welcher in dem Transponder abgelegte Daten an die fahrzeugseitige Steuereinheit sendet und so den drahtlosen Dialog startet (vgl. WO 00/09835 A1).

Sämtliche vorbekannten Zugriffsprüfvorrichtungen eignen sich nicht oder nur bedingt für Krafträder bzw. andere türlose Fahrzeuge ohne geschlossene Fahrgastzelle. Denn an dieser Stelle fällt natürlich der Zugang zu den Kraftfahrzeugtüren nach positiver Prüfung weg. Auch ergeben sich ganz andere Anforderungen, die dem spezifischen Einsatzzweck Rechnung tragen. So sind insbesondere Krafträder Manipulationen ausgesetzt, weil sie und ihre Bestandteile leicht zugänglich sind.

Im Übrigen verfügen bekannte Ausgestaltungen unverändert über ein Zündschloss, in welches ein mechanischer Schlüssel eingeführt werden muss. Das ist vor dem Hintergrund nachteilig, dass Beschädigungen einer Gabelbrücke durch weitere anhängende Schlüssel nicht ausgeschlossen werden können. Auch ist die Bedienung umständlich, wenn man bedenkt, dass Motorradfahrer in der Regel Handschuhe tragen und diese zum Starten des Kraftrades üblicherweise ausziehen müssen. Jedenfalls ist der Komfort verbesserungsbedürftig. - Hier setzt die Erfindung ein.

Der Erfindung liegt das technische Problem zugrunde, eine derartige Zugriffsprüfvorrichtung für Krafträder zu schaffen, welche komfortabel aufgebaut und vor Manipulationen geschützt ist.

Zur Lösung dieser Aufgabe ist Gegenstand der Erfindung eine Zugriffsprüfvorrichtung für insbesondere türlose Fahrzeuge ohne geschlossene Fahrgastzelle wie Krafträder, motorisierte Boote, Motorschlitten, Jetski oder dergleichen, mit
- einem bedienerseitigen Identifizierungselement, sowie mit
- einer fahrzeugseitigen und in einem geschützten Gehäuse untergebrachten Steuereinheit, und mit
- einem Näherungssensor, welcher registriert, dass sich ein zugriffswilliger Bediener dem Fahrzeug nähert,
wobei das Identifizierungselement nach Auslösen des Näherungssensors in eine die Zugriffsberechtigung eines Bedieners prüfenden drahtlosen Dialog mit der Steuereinheit tritt, und
wobei das Gehäuse mit der fahrzeugseitigen Steuereinheit und der Näherungssensor im geschützten Innern oder an einer unzugänglichen Innenseite eines fahrzeugfesten Bestandteiles angeordnet sind.

Vorzugsweise sind die Steuereinheit inklusive einer Empfangseinrichtung sowie gegebenenfalls dem Näherungssensor in dem an einem Rahmen oder einer Karosserie befestigten geschützten Gehäuse untergebracht. Dieses Gehäuse kann beispielsweise unterhalb der Sitzbank mit dem Rahmen bzw. der Karosserie verschraubt sein. Auch ist es denkbar, dass betreffende Gehäuse mit sämtlichen zuvor beschriebenen Einrichtungen in die Sitzbank zu integrieren. Daneben liegen Anbringungen im Lampengehäuse, einer Gabelbrücke, unterhalb eines Tankhohlraumes, an oder in einer Verkleidung, im Heckbürzel oder sogar im oder am Motorgehäuse im Rahmen der Erfindung. Es kann aber auch so vorgegangen werden, dass die Steuereinheit in einem am Rahmen oder der Karosserie befestigten geschützten Gehäuse ohne den Näherungssensor und die Empfangseinrichtung angeordnet ist. Dabei lässt sich das betreffende Gehäuse in diesem Fall wiederum an den zuvor beschriebenen Stellen platzieren. Dagegen werden die Empfangseinrichtung, z. B. Antenne, sowie der Näherungssensor regelmäßig in oder unter der Sitzbank, in einer Lenkvorrichtung, z. B. Lenkstange, in einem eigenen separaten karosseriefesten Gehäuse, im Lampengehäuse, der Gabelbrücke, unterhalb des Tankhohlraumes, an oder in der Verkleidung, oder im Heckbürzel unzugänglich angeordnet. Gleiches gilt für das optionale Identifizierungsmodul.

Sofern eine Anbringung in einer Lenkvorrichtung, z. B. Lenkstange, geplant ist, bietet es sich besonders an, den Näherungssensor und/oder die Empfangseinrichtung bzw. Antenne und/oder das Identifizierungsmodul in einen dort endseitig vorgesehenen Gas- und/oder Kupplungsgriff zu integrieren. Denn diese exponierte Lage stellt zweierlei sicher. Zum einen wird ein drahtloser Dialog zwischen der Empfangseinrichtung bzw. Antenne und der daran angeschlossenen fahrzeugseitigen Steuereinheit mit dem Identifizierungselement nicht durch gegebenenfalls störende und umgebende Kraftradteile gestört. Zum anderen registriert ein dort angebrachter Näherungssensor einfach und problemlos die Ankunft eines zugriffswilligen Bedieners.

Das Identifizierungsmodul kann - wie die Empfangseinrichtung und/oder der Näherungssensor - ebenfalls in der Lenkstange bzw. im Gas- und/oder Kupplungsgriff angeordnet sein. Bei dem Identifizierungsmodul mag es sich um ein Fingerabdrucklesegerät handeln, welches zumeist mit einer zugehörigen Chipkarte kombiniert wird, die regelmäßig fest in einen bedienerspezifischen Helm integriert ist. Dies deshalb, um eine eindeutige Zuordnung von Helm, Chipkarte und zugehörigem Kraftrad zu gewährleisten.

Es ist aber auch denkbar, als Identifizierungsmodul eine Iriserkennungsvorrichtung oder vergleichbare Einheiten einzusetzen. Eine solche Iriserkennungsvorrichtung mag vorzugsweise hinter einem teildurchlässigen Außenspiegel des Kraftrades als dort befindliche Kamera zur Iriserkennung ausgeführt sein. Jedenfalls ermöglichen beide Vorgehensweisen beispielhaft eine eindeutige Identifizierung eines zugriffswilligen Bedieners und ermöglichen nur diesem den Zugriff auf das solchermaßen gesicherte Kraftrad. Denkbar ist es an dieser Stelle grundsätzlich auch, den Bediener mit Hilfe einer DNA-Analyse eindeutig zu erkennen, welche beispielsweise eine Speichelprobe, Hautoder Haarbestandteile auswertet.

Nach positiver Prüfung der Zugriffsberechtigung des Bedieners werden einzelne, die Funktion des Fahrzeuges sicherstellende Schließeinrichtungen und eine Zündeinrichtung entriegelt. Bei diesen Schließeinrichtungen kann es sich um ein Lenkradschloss, ein Tankschloss, ein Sitzbankschloss, Schlösser von Anbaukoffern usw. handeln. Die Zündeinrichtung wird freigegeben, ohne dass ein mechanischer Schlüssel in das dann natürlich nicht mehr vorhandene Zündschloss eingesteckt zu werden braucht. Hierdurch ist der Komfort enorm verbessert. Gegebenenfalls lässt sich nach positiver Prüfung der Zugriffsberechtigung des Bedieners auch eine Wegfahrsperre in Verbindung mit einer Motorelektronik freischalten, die die Diebstahlsicherheit - neben den Schließeinrichtungen und der Zündeinrichtung - nochmals erhöht.

Bei den Schließeinrichtungen handelt es sich hauptsächlich um mit vorzugsweise einem elektrisch beaufschlagbaren und linear verstellbaren Verriegelungsbolzen ausgerüstete Schlösser. Dabei mag der jeweils elektrisch verstellbare Verriegelungsbolzen so ausgeführt sein und funktionieren, wie dies grundsätzlich in der DE 199 06 268 A1 bzw. der deutschen Patentanmeldung 100 39 839.1 beschrieben wird. Solche elektromotorischen bzw. mechatronischen Schlösser zeichnen sich durch robusten Aufbau und geringe Herstellungskosten aus und eignen sich besonders für den Einsatz bei Krafträdern. Denn die Ver- und Entriegelung wird letztlich einzig mit Hilfe des linear verstellbaren Verriegelungsbolzens erreicht und sichergestellt, welcher in eine komplementäre Aufnahme am festzulegenden Bauteil eingreift.

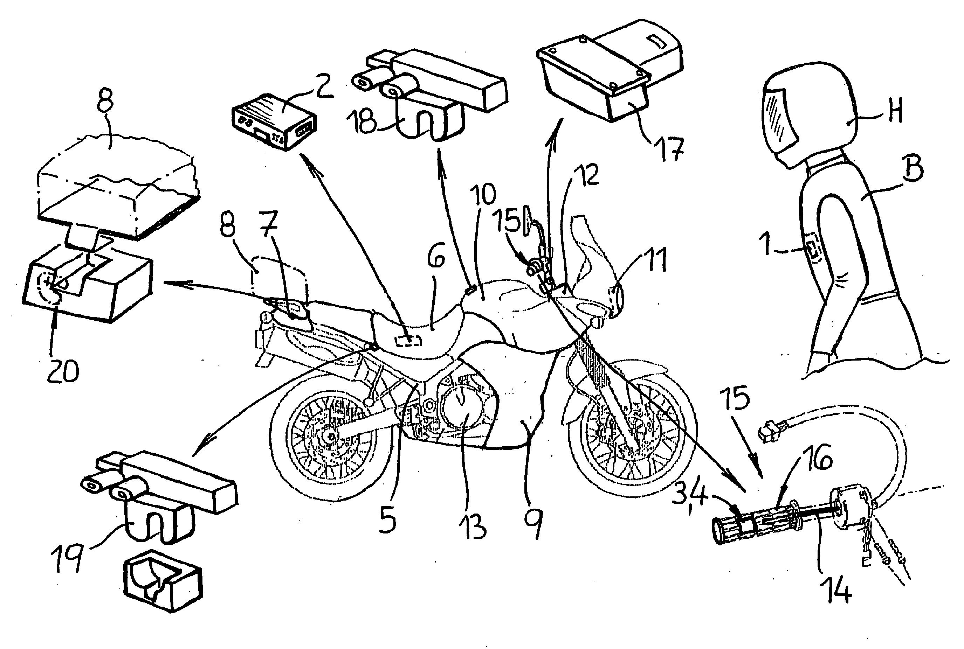

Im Folgenden wird die Erfindung anhand einer lediglich ein Ausführungsbeispiel darstellenden Zeichnung näher erläutert. Die einzige Figur zeigt schematisch ein Kraftrad, welches mit der zuvor beschriebenen Zugriffsprüfvorrichtung ausgerüstet ist.

In der einzigen Figur erkennt man ein Kraftrad, welches ohne Zündschloss auskommt bzw. lediglich einen Notzugang mit einem mechanischen Notschlüssel ermöglicht. Dagegen findet üblicherweise der Zugriff mit Hilfe einer Zugriffsprüfvorrichtung statt, die im Rahmen des Ausführungsbeispiels als "keyless go"-System oder "keyless entry"-System ausgeführt ist. Zu diesem Zweck verfügt ein zugriffswilliger Bediener B über ein bedienerseitiges Identifizierungselement 1. Hierbei kann es sich um eine simple Chipkarte handeln, deren Daten drahtlos von einer fahrzeugseitigen Steuereinheit 2 abgefragt werden. Ein Dialog zwischen fahrzeugseitiger Steuereinheit 2 und bedienerseitigem Identifizierungselement 1 wird aufgenommen, sobald ein Näherungssensor 3 registriert, dass sich der zugriffswillige Bediener B dem Kraftrad nähert.

Bei der Chipkarte kann es sich um eine Ausführungsform handeln, auf welcher eine Fingerabdruckprüfeinheit zur eindeutigen Identifizierung des zugriffswilligen Bedieners B installiert ist. Diese Chipkarte wird zumeist von dem Bediener B mitgeführt. Sie kann aber auch in einen Motorradhelm bzw. Schutzhelm H integriert sein. Für diesen Fall bedarf es jedoch, um einen Diebstahlschutz jederzeit zu gewährleisten, einer separaten Identifizierungseinrichtung am Fahrzeug, beispielsweise in Gestalt einer Fingerabdruckprüfeinheit oder einer Iriserkennungsvorrichtung. Die Fingerabdruckprüfeinheit mag an einem Gasgriff 16 einer Lenkvorrichtung 15 angeordnet sein. Die Iriserkennungsvorrichtung ist bevorzugt in einen (teildurchlässigen) Außenspiegel des Kraftrades eingesetzt, um eine eindeutige Identifizierung des Nutzers bzw. zugriffswilligen Bedieners B sicherzustellen.

Ziel des eingeleiteten drahtlosen Dialoges zwischen Identifizierungselement 1 und Steuereinheit 2 ist es, die Zugriffsberechtigung des Bedieners B zu prüfen. Wird diese Prüfung positiv abgeschlossen, so gib das Kraftrad die Benutzung für den Bediener B frei.

Um die Steuereinheit 2 und/oder den Näherungssensor 3 vor unberechtigten Zugriffen zu schützen, sind die betreffenden Elemente 2 und 3 wahlweise im geschützten Inneren des Kraftrades und/oder an einer unzugänglichen Innenseite eines fahrzeugfesten Bestandteiles angeordnet. Das gilt auch für ein Identifizierungsmodul 4, bei dem es sich um das Fingerabdrucklesegerät oder die Iriserkennungsvorrichtung handeln mag.

Im Einzelnen findet sich die Steuereinheit 2 bei dem Ausführungsbeispiel in einem geschützten Gehäuse, welches seinerseits am Rahmen 5 des Kraftrades befestigt ist. Dieses Gehäuse kann beispielsweise unter einer Sitzbank 6 angeordnet werden. Ebenso ist es denkbar, das Gehäuse in die Sitzbank 6 zu integrieren. Daneben ist natürlich auch eine Anbringung des Gehäuses und damit der Steuereinheit 2 in einem Heckbürzel 7, einem Topcase 8, in oder hinter einer Verkleidung 9, unter- oder innerhalb eines Hohlraumes eines Tanks 10, im Lampengehäuse 11 in oder unter einer Gabelbrücke 12 oder sogar im oder am Motorgehäuse 13 denkbar. Die vorgenannten Anbringungsmöglichkeiten eigenen sich auch zur Aufnahme einer Empfangseinrichtung 14 des in der Regel optisch arbeitenden Näherungssensors 3.

Im Rahmen des Ausführungsbeispiels wird die Steuereinheit 2 in einem geschlossenen Gehäuse unter der Sitzbank 6 platziert, wohingegen die hiermit zusammenwirkende Empfangseinrichtung 14, z. B. Antenne 14 und der Näherungssensor 3, einzeln oder zusammen ebenfalls in oder unter der Sitzbank 6, im Heckbürzel 7, im Topcase 8 oder einem anderen Koffer, unterhalb des Tankes 10, in oder an der Verkleidung 9, in oder unter der Gabelbrücke 12 oder im Lampengehäuse 11 angeordnet sein mögen.

Bevorzugt ist jedoch eine Anbringung des Näherungssensors 3 in der Lenkvorrichtung 15 und dort in dem endseitigen Gasgriff 16. Das heißt, der Näherungssensor 3 ist in den Gasgriff 16 endseitig der Lenkvorrichtung bzw. Lenkstange 15 integriert. Der Näherungssensor 3 kann aber auch innerhalb der Sitzbank 6 angeordnet sein. Ebenso ist in den Gasgriff 16 die Empfangseinrichtung bzw. Antenne 14 integriert, die mit der Steuereinheit 2 zusammenwirkt, um in Verbindung mit dem Identifizierungselement 1 des Bedieners B den gewünschten Dialog vollführen zu können.

Nach positiver Prüfung der Zugangsberechtigung des Bedieners B werden einzelne, die Funktion des Kraftrades sicherstellende, Schließeinrichtungen entriegelt. Bei diesen Schließeinrichtungen handelt es sich um ein Lenkradschloss 17, welches im Detail so aufgebaut ist, wie in der DE 100 39 839 bzw. der DE 101 04 842 beschrieben. Ebenso gehören zu den Schließeinrichtungen ein Tankschloss 18, ein Sitzbankschloss 19 sowie ein oder mehrere Anbaukofferschlösser 20.

Daneben wird nach positiver Prüfung der Zugriffsberechtigung des Bedieners B eine nicht ausdrücklich dargestellte Zündeinrichtung in Verbindung mit einer Wegfahrsperre sowie der Motorelektronik freigegeben, die zusammengenommen eine Einheit mit der Steuereinheit 2 bilden und - wie diese - in dem bereits beschriebenen fahrzeugfesten Gehäuse untergebracht sind.

Bei den zuvor beschriebenen Schließeinrichtungen 17, 18, 19 und 20 handelt es sich um Schlösser, die mit einem linear verstellbaren Verriegelungsbolzen ausgerüstet sind, dessen Funktionsweise grundsätzlich in der DE 199 06 268 A1 beschrieben wird. Das heißt, es handelt sich bei dem betreffenden linear verstellbaren Verriegelungsbolzen um einen sogenannten "Shuttle". Das Schloss bzw. der linear verstellbare Verriegelungsbolzen wird jeweils elektrisch beaufschlagt, und zwar von der Steuereinheit 2, die auch die benachbarte Zündeinrichtung sowie die Wegfahrsperre und die Motorelektronik mit einem Freigabesignal versorgt, sobald die Prüfung der Zugriffsberechtigung des Bedieners B positiv abgeschlossen worden ist.

## Patentansprüche

1. Kraftrad mit einer Zugriffprüfvorrichtung zur Prüfung der Zugangsberechtigung eines Bedieners B
- mit einem bedienerseitigen Identifizierungselement (1) sowie
- mit einer fahrzeugseitigen und in einem geschützten Gehäuse untergebrachten Steuereinheit (2),
**dadurch gekennzeichnet, dass**
die Zugriffsprüfvorrichtung einen Näherungssensor (3) umfasst, welcher registriert, dass sich der zugriffswillige Bediener B dem Fahrzeug nähert, wobei das Identifizierungselement (1) nach Auslösen des Näherungssensors (3) in einen die Zugriffsberechtigung des Bedieners B prüfenden drahtlosen Dialog mit der Steuereinheit (2) tritt und der Näherungssensor (3) im geschützten Innern und/oder an einer unzugänglichen Innenseite eines fahrzeugfesten Bestandteils angeordnet sind.

2. Kraftrad nach Anspruch 1,**dadurch gekennzeichnet, dass** die Steuereinheit (2) inklusive einer Empfangseinrichtung (14) sowie gegebenenfalls dem Näherungssensor (3) in einem an einem Rahmen (5) oder einer Karosserie befestigten geschützten Gehäuse untergebracht sind.

3. Kraftrad nach Anspruch 1, **dadurch gekennzeichnet, dass** die Steuereinheit (2) in einem am Rahmen (5) oder der Karosserie befestigten geschützten Gehäuse und die Empfangseinrichtung (14) sowie der Näherungssensor (3) und ein Identifizierungsmodul (4) in oder unter einer Sitzbank (6), in einer Lenkvorrichtung (15), zum Beispiel Lenkstange (15), in einem separaten karosseriefesten Gehäuse, im Lampengehäuse (11), einer Gabelbrücke (12), unterhalb eines Tankhohlraumes, an oder in einer Verkleidung (9) oder im Heckbürzel (7) unzugänglich angeordnet sind.

4. Kraftrad nach einem der Ansprüche 1 bis 3, **dadurch gekennzeichnet, dass** nach positiver Prüfung der Zugriffsberechtigung des Bedieners (B) eine die Funktion des Fahrzeuges sicherstellende Schließeinrichtung, wie z. B. Lenkradschloss (17), Tankschloss (18), Sitzbankschloss (19), Anbaukofferschloss (20) usw. und eine Zündeinrichtung sowie gegebenenfalls eine Wegfahrsperre in Verbindung mit einer Motorelektronik freigegeben werden.

5. Kraftrad nach Anspruch 4, **dadurch gekennzeichnet, dass** die Schließeinrichtungen (17 bis 20) als mit einem elektrisch beaufschlagbaren und linear verstellbaren Verriegelungsbolzen ausgerüstete Schlösser ausgeführt sind.

6. Kraftrad nach einem der Ansprüche 3 bis 5, **dadurch gekennzeichnet, dass** das Identifizierungsmodul (4) als den Bediener (B) eindeutig erkennendes Fingerabdrucklesegerät, Iriserkennungsvorrichtung usw. ausgebildet ist.

## Claims

1. Motorcycle with an access control device for controlling the access entitlement of an operator B
- with an operator-side identification element (1) and also
- with a vehicle-side control unit (2) which is accommodated in a protected housing,
**characterised in that**
the access controlling device comprises a proximity sensor (3) which registers that the operator B wanting access is approaching the vehicle, wherein the identification element (1), after triggering the proximity sensor (3), enters into a wireless dialogue with the control unit (2), controlling the access entitlement of the operator B, and the proximity sensor (3) is arranged in the protected interior and/or on an inaccessible inner side of a constituent fixed to the vehicle.

2. Motorcycle according to Claim 1, **characterised in that** the control unit (2) including a receiving device (14) and also, if appropriate, the proximity sensor (3) are accommodated in a protected housing fixed on a frame (5) or a vehicle body.

3. Motorcycle according to Claim 1, **characterised in that** the control unit (2) is inaccessibly arranged in a protected housing fixed on the frame (5) or the vehicle body and the receiving device (14) and also the proximity sensor (3) and an identification module (4) are inaccessibly arranged in or below a seat (6), in a steering device (15), for example steering rod (15), in a separate housing fixed to the vehicle body, in the lamp housing (11), a fork bridge (12), below a tank cavity, on or in a fairing (9) or in the rear fairing (7).

4. Motorcycle according to any one of Claims 1 to 3, **characterised in that**, following positive controlling of the access entitlement of the operator (B), a locking device securing the function of the vehicle , such as e.g. a steering lock (17), tank lock (18), seat lock (19), case attachment lock (20), etc. and an ignition device as well as, if appropriate, an immobiliser in combination with engine electronics are cleared.

5. Motorcycle according to Claim 4, **characterised in that** the locking devices (17 to 20) are realised as locks equipped with a locking bolt that can be acted upon electrically and displaced linearly.

6. Motorcycle according to any one of Claims 3 to 5, **characterised in that** the identification module (4) is constructed as a fingerprint reading device, iris recognition device, etc. which unambiguously recognises the operator (B).

## Revendications

1. Cyclomoteur équipé d'un dispositif de contrôle d'accès pour le contrôle de l'autorisation d'accès d'un utilisateur B
- avec un élément d'identification (1) côté utilisateur et
- une unité de commande (2) côté véhicule et logée dans un boîtier protégé,
**caractérisé en ce que**
le dispositif de contrôle d'accès comprend un capteur de proximité (3) qui enregistre que l'utilisateur B souhaitant l'accès se rapproche du véhicule, l'élément d'identification (1) entrant après le déclenchement du capteur de proximité (3) dans un dialogue sans fil et contrôlant l'autorisation d'accès de l'utilisateur B avec l'unité de commande (2) et le capteur de proximité (3) étant disposé dans l'intérieur protégé et/ou sur un côté intérieur non accessible d'un composant solidaire du véhicule.

2. Cyclomoteur selon la revendication 1, **caractérisé en ce que** l'unité de commande (2) avec un dispositif de réception (14) et éventuellement le capteur de proximité (3) sont logés dans un boîtier protégé et fixé sur un cadre (5) ou une carrosserie.

3. Cyclomoteur selon la revendication 1, **caractérisé en ce que** l'unité de commande (2) est disposée de façon non accessible dans un boîtier protégé et fixé sur le cadre (5) ou la carrosserie et le dispositif de réception (14) ainsi que le capteur de proximité (3) et un module d'identification (4) sont disposés de façon non accessible dans ou sous une selle (6), dans un dispositif de direction (15), par exemple le guidon (15), dans un boîtier séparé et solidaire de la carrosserie, dans le boîtier de lampe (11), un pontet de fourche (12), au-dessous d'une cavité de réservoir, sur ou dans un habillage (9) ou dans la partie arrière (7).

4. Cyclomoteur selon l'une quelconque des revendications 1 à 3, **caractérisé en ce que**, après le contrôle positif de l'autorisation d'accès de l'utilisateur (B), un dispositif de fermeture assurant le fonctionnement du véhicule, par exemple l'antivol de direction (17), l'antivol de réservoir (18), l'antivol de selle (19), l'antivol du coffre rapporté (20), etc., et un dispositif d'allumage et éventuellement un dispositif anti-démarrage en liaison avec une électronique de moteur sont libérés.

5. Cyclomoteur selon la revendication 4, **caractérisé en ce que** les dispositifs de fermeture (17 à 20) sont conçus sous forme de serrures équipées avec un boulon de verrouillage pouvant être sollicité électriquement et réglable de façon linéaire.

6. Cyclomoteur selon l'une quelconque des revendications 3 à 5, **caractérisé en ce que** le module d'identification (4) est conçu sous forme de lecteur d'empreinte digitale, de dispositif de reconnaissance par iris, etc., identifiant clairement l'utilisateur (B).
